# EUROPEAN PATENT APPLICATION

(11) **EP 3 876 228 A1**
(43) Date of publication of application: **08.09.2021**
(21) Application number: 18938773.1
(22) Date of filing: 30.10.2018
(51) Int. Cl.: G10L 15/08, H04M 3/51

(54) **AUTOMATED ASSESSMENT OF THE QUALITY OF A DIALOGUE SYSTEM IN REAL TIME**

(71) Applicant: Federalnoe Gosudarstvennoe Avtonomnoe Obrazovatelnoe Uchrezhdenie Vysshego Obrazovaniya "Moskovsky Fiziko-Tekhnichesky Institut, Moscow, 117303 (RU)
(72) Inventor: SUVOROV, Vladimir Alexandrovich, St.Petersburg, 192238 (RU)
(74) Representative: Benatov, Samuil Gabriel
(86) International application number: PCT/RU2018/000713
(87) International publication number: WO 2020/091619

(57) **Abstract**

The present invention relates to the field of processing digital data, more particularly to an automated assessment of the quality of a dialogue system on the basis of assessing the relevance of individual messages. The claimed system comprises: a module for determining the subject matter of a dialogue, which is capable of obtaining a dialogue text in real time and of automatically determining the subject matter of said dialogue text; a module for processing the dialogue text, which is capable of identifying phrases from the dialogue text on the basis of data relating to the subject matter that have been determined by the module for determining the subject matter; a phrase filtration module, which is capable of changing personal information into specialized topic words; a model module for classifying the current state of the dialogue, which is capable of determining the motivation for continuing the subject matter of the dialogue in real time on the basis of a sequence of phrases and of determining the state of completion of the dialogue on the subject matter determined by the module for determining the subject matter of the dialogue; a model module for classifying the current quality of the dialogue, which is capable, upon receipt of information relating to the state of completion of the dialogue, of assigning a numerical quality score to the dialogue on the basis of phrases obtained from the module for classifying the current state of the dialogue.

## Description

### FIELD OF INVENTION

The invention relates to the domain of digital data processing, particularly to the methods of automated assessment of the quality of a dialogue system based on the relevance evaluation of individual messages.

### DESCRIPTION OF THE PRIOR ART

Patent EP2287835B1 (IPC G10L15/00; G10L15/22, publ. 23/02/2011) discloses a system for modelling user behaviour for evaluating a voice dialogue.

Patent application US20090112586A1 (IPC G10L15/00, publ. 30/04/2009) discloses a system and method for evaluating user simulations in an voice dialogue system. This solution employs user-declared modelling of a conversational dialogue system, which involves combining the first set of one or more points from a real user dialog window, aggregating a second set of one or more points from a simulated user dialog window associated with the user model, determining the similarity of distributions, associated with each point of the first set and the second set, where the similarity is determined using the divergence indicator, which does not require any assumptions about the shape of the distributions. The disadvantages of such solutions are a high level of errors in assessing the quality of the dialogue system and low efficiency due to the slow speed of dialog processing.

There are also known solutions for evaluating the quality of a dialogue system, such as an assessment method. With this method, dialogues are assessed using a quality rating scale, where a person assigns a certain number of points, according to their opinion. From a technical standpoint, services such as AWS Mechanical Turk or Yandex Toloka could serve as an example of such a solution. A number of people receive a series of formulated tasks to assess of a certain number of dialogues. In the future, the estimates can be averaged. This type of assessment is also implemented in a number of services and is used universally, for example, in chats like Jivosite where at the end of the dialogue the user is asked to rate the quality of the dialogue. The disadvantages of these solutions are that they are not completely automated, since they involve human input as part of the solution and they are poorly scalable.

Evaluation of a set of dialogues by mathematical methods using formal metrics like F1 or perplexity, where F1 is a measure of proximity used for comparison of the reference answer with the real one, can be used as a solution in the current state of the art, locally solving issues of evaluating a set of dialogues by mathematical methods. Usually, a measure of closeness of words without their order is used or some modification of this system (http://www.aclweb.Org/anthology/E 12-1048): the perplexity solution is a mathematical metric from semantic analysis and it provisionally shows how close the probability of getting an answer from the system is to the likelihood of getting an answer in a real situation (https://arxiv.org/pdf/1301.6705.pdf). The disadvantages of such solutions are poor compliance with the real quality of the dialogue that is perceived by people, high level of errors when evaluating systems that generate correct answers, which are however out of line with the reference answers and a variability of reference answers.

### SUMMARY OF THE INVENTION

The technical problem to be solved by the claimed technical solution is the creation of a reliable and simple system for automated assessment of the quality of the dialogue system, which allows real-time automated assessment of the quality of the dialogue. Also, a significant problem to be solved for this kind of technical solutions is to ensure an increase in the speed of data processing and the accuracy of processing dialogues.

The technical result consists in a reduction of computational resources and an increase the speed of determining the automated quality assessment of the dialogue system by replacing personal information with specialised topic words.

In a preferred embodiment, a system for automated quality assessment of a dialogue system in real time is claimed, comprising:
1) a dialogue topic determination module, capable of receiving the text of the dialogue in real time and automatically determining the topic of this text of the dialogue;
2) a dialogue text processing module, capable of isolating phrases from the dialogue text based on topic data that have been determined by the topic determination module;
3) a phrase filtering module capable of replacing personal information with specialised topic words;
4) a state of dialogue classifier module, capable of determining the motivation for continuing the topic of the dialogue in real time based on a sequence of phrases and determining the state of completion of the dialogue on the topic determined by the dialogue topic determination module;
5) a quality of dialogue classifier module, capable of assigning a quality score to the dialogue based on phrases received from the state of dialogue classifier module when receiving information about the state of completion of the dialogue.

In a particular embodiment, the system additionally includes a module for additional training of the dialogue system capable of additional training of the dialogue system based on the score of the dialogue quality.

In another particular embodiment, an open source library for topic modelling of large collections of text documents (BigARTM) or k-means is used to classify topics.

In another particular embodiment numbers, names, geographical names, company names, individuals are considered personal information.

In another particular embodiment, the topic word list is pre-formed using Named Entity Recognition (NER) mechanisms.

Named Entities (NEs) are objects of a certain type, most often, they are composites, for example, names of organisations, names of people, dates, places, currencies, etc. These categories can be represented by concepts of a predefined or dynamically built ontology.

Examples of named entities:
- personal names: I. Sechin, Ben White;
- geographical names: the river Oka, the city of Moscow;
- names of companies/organisations: RZD (Russian Railways), JSC "Comfort";
- dates and time periods: 02/03/1913, 2 business days;
- telephone numbers: +7(123)456-78-90;
- addresses: 221B Baker Street, London, UK;
- trademarks: Nokia, Apple, Land Rover;
- currency symbols: P, $, GBP;
- literature references: [2], [Ivanov, 1995];
- genes, proteins, chemical substances: H2N-CH(R)-COOH.

### BRIEF DESCRIPTION OF THE DRAWINGS

The embodiment of the invention will be described below in accordance with the accompanying drawings, which are presented to explain the essence of the invention and in no way limit the scope of the invention. The claim is provided with reference to the following drawings:
Fig. 1 is a general view of the claimed system;
Fig. 2 is a general diagram of a computing device.

### DETAILED DESCRIPTION OF THE INVENTION

Various embodiment details of the present invention will be described in the following detailed description so the preferred embodiment of this invention becomes apparent. However, it shall be obvious to a skilled person how the present invention can be used, with or without these embodiment details. In other instances, well-known methods, procedures, and components have not been described in detail so as not to obscure the details of the present invention.

In addition, it shall be clear from the disclosure above that the invention is not limited to the foregoing embodiment. Numerous possible modifications, alterations, variations and substitutions, while retaining the spirit and form of the present invention, will be apparent to a skilled person.

The present invention is aimed at creating a system for automated quality assessment of a dialogue system in real time.

An example of such a system would be, for example, a call centre system that must decide whether a robot can continue a dialogue with a user.

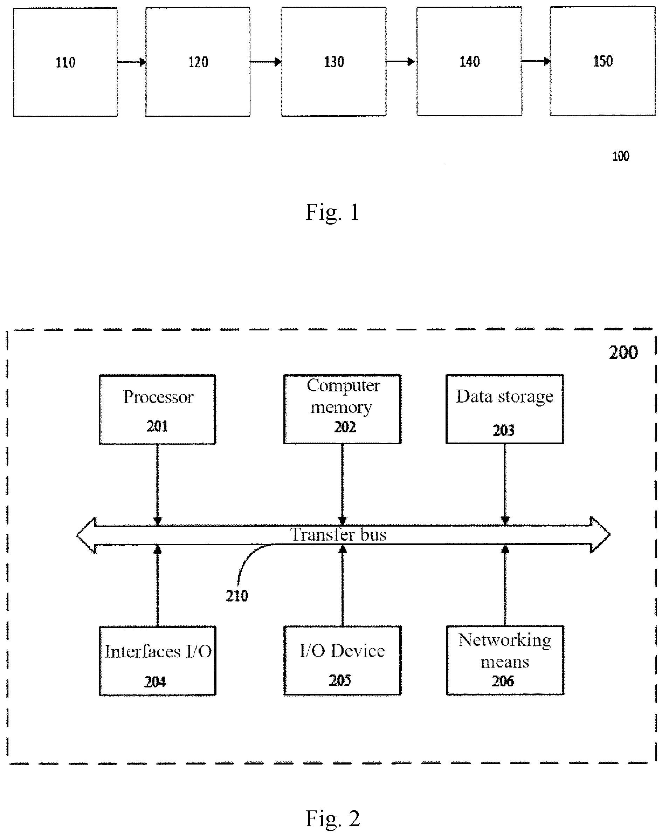

As shown in Fig. 1, the claimed system (100) includes the following interconnected modules: a dialogue topic determination module (110), a dialogue text processing module (120), a phrase filtering module (130), a state of dialogue classifier module (140) and a quality of dialogue classifier module (150).

The dialogue topic determination module (110) is capable of receiving the text of the dialogue in real time. An example of such a dialogue can be a dialogue between a user, using, for example, his mobile phone with specialised software, and a bot. Where the user and the bot discuss, for example, the user's work, hobbies, family, weather, or conduct dialogues on other topics.

Further, the dialogue topic determination module (110) automatically determines the topic of the text of the dialogue between the above user and the bot.

In this case, the subject of the resulting dialogue text is determined automatically using an open-source library for topic modelling of large collections of text documents (BigARTM) or using the k-means algorithm.

The BigARTM library contains a lot of pre-trained predictors, particularly, neural network models, which can be used for classifying the text of a dialogue between a human and a bot (robot), that is, finding a correspondence between the text of the dialogue and a predetermined set of possible classes of topics (categories) of the previously saved dialogs to which this dialog text may refer.

The classified dialogue text is sent to the dialogue text processing module (120), which isolates phrases from the dialogue text based on the topic data, and which have been determined by the dialogue topic determination module (110). Then it presents the received text of the dialogue as a set of sequences of the isolated phrases.

Next, these isolated phrases are sent to the phrase filtering module (130), in which personal information is replaced with specialised topic words. This happens in the following way, each received phrase is analysed in order to find those areas in the phrase that contain personal information, such as numbers, names, geographical names, company names, then this personal information is replaced with specialised topic words. The list of topic words is formed in advance using the named entities mechanisms (named entity recognition, NER).

Below is an example of such a replacement.

For example, the phrase "I had a birthday on December 10th" is replaced with the phrase "I had a birthday on <DATE>".

### <DATE> is a specialised topic word.

Then, the state of dialogue classifier module (140), determines the motivation for continuing the topic of the dialogue in real time based on a sequence of phrases and the state of completion of the topic dialogue determined by the dialogue topic determination module.

For example, motivation can be determined as follows: from the set of received isolated phrases, the state of dialogue classifier module (140) generates a sequence of phrases with respect to the time when they arrived at the dialogue topic determination module (110). Using the linguistic methods of text analysis disclosed in the prior art, it determines the motivation for continuing the topic of the dialogue in real time.

In particular, the sequence can consist of the following phrases:
- How are you doing?
- Good.
- What are you doing?
- Mitochondria reside in the cells.

An example of determining the motivation for continuing the topic:
a. How are you doing? — Yes.
b. How are you doing? Good — Probably.
c. How are you doing? Good. What are you doing? — Yes.
d. How are you doing? Good. What are you doing? Mitochondria reside in the cells — No.
e. Good — Probably.
f. Good. What are you doing? — Yes.
g. Good. What are you doing? Mitochondria reside in the cells — No.
h. What are you doing? — Yes.
i. What are you doing? Mitochondria reside in the cells — Probably.
j. Mitochondria reside in the cells — Probably.

The sequence can consist of one phrase: "How are you doing?"

In this case, according to the linguistic methods of text analysis disclosed in the prior art, it determines such a sequence of phrases in relation to a given topic and assigns an active state of dialogue to this topic.

Alternatively, a sequence of phrases can be composed of phrases, for example: "How are you doing?" — "Good".

In this case, according to the linguistic methods of text analysis disclosed in the prior art, the module determines such a sequence of phrases in relation to a given topic that the topic of the second phrase coincides with the topic of the first phrase and assigns an active state of dialogue to this topic.

In yet another embodiment, the sequence of phrases can be composed of phrases, for example:
"How are you doing?" — "Good" — "What are you doing?" — "Mitochondria reside in the cells".

In this case, according to the linguistic methods of text analysis disclosed in the prior art, the module determines such a sequence of phrases in relation to a given topic that the topic of the fourth phrase does not coincide with the topics of the first three phrases and accordingly determines the state of completion of the dialogue on the topic determined by the dialogue topic determination module.

After determining the state of completion of the dialogue on the topic, the quality of dialogue classifier module (150) assigns a quality score to the dialogue based on phrases received from the state of dialogue classifier module when receiving information about the state of completion of the dialogue.

The quality score is assigned, for example, using a previously generated base that contains a list of phrases and indications which point can be assigned to a given phrase. Moreover, this list of phrases can be generated by methods disclosed in the prior art using neural networks. A two-layer CNN with softmax function or a four-layer CNN can serve as an example of such a network.

Fig. 2 below shows a general diagram of a computer device (200) that provides data processing necessary for the implementation of the claimed system.

In general, the device (200) includes components, such as: one or more processors (201), at least one memory chip (202), data storage (203), I/O interfaces (204), I/O device (205), and networking means (206).

The processor (201) of the device performs the basic computational operations necessary for the operation of the device (200) or the functionality of one or more of its components. The processor (201) runs the necessary machine-readable commands contained in RAM (202).

In particular, the processor (201) can be a CISC microprocessor unit (Complete Instruction Set Computing), a RISC microprocessor unit (Reduced Instruction Set Computer), a VLIW microprocessor unit (Very Long Instruction Word), an another instruction set implementing-processor, or processors that implement a combination of instruction sets. The processor (201) may also be one or more special-purpose computing devices, such as ASIC (Application-Specific Integrated Circuit), FPGA (Field-Programmable Gate Array), DSP (Digital Signal Processor), a network processor, etc. The processor (201) is configured to run commands to perform the operations and functions described in this document.

Computer memory (202) is usually the RAM-type and contains the necessary program logic to provide the required functionality.

Data storage (203) can be HDDs, SSDs, RAID array, NAS, flash memory, optical storage devices (CD, DVD, MD, Blue-Ray disks), etc. Data storage (203) allows for long-term storage of various types of information, such as processing history of transaction requests (logs), user IDs, etc.

Interfaces (204) are standard means of connection, e. g. USB, RS232, RJ45, LPT, COM, HDMI, PS/2, Lightning, FireWire, etc.

The choice of interfaces (204) depends on the specific design of the device (200) that can have a form of a personal computer, mainframe, server cluster, thin client, smartphone, laptop, etc.

I/O devices (205) can have a form of a keyboard, joystick, display (touch screen), projector, touchpad, mouse, trackball, light pen, speakers, microphone, etc.

Networking means (206) are selected depending on a device that provides network reception and transmission, such as an Ethernet card, WLAN/Wi-Fi module, Bluetooth module, BLE module, NFC module, IrDa, RFID module, GSM modem, etc. Devices (205) enable data exchange via a wired or wireless data channel, such as WAN, PAN, LAN, Intranet, Internet, WLAN, WMAN or GSM.

The components of the device (200) are interfaced via a common transfer bus (210).

The present claim materials present the preferred disclosure of the implementation of the claimed technical solution, which should not be used as limiting other, particular embodiments, which do not go beyond the claimed scope of legal protection and are obvious to a person skilled in the relevant field of technology.

Certain parts of the description of preferred embodiments are presented in the form of algorithms and symbolic representations of operations with data bits in computer memory. Such descriptions and algorithms representations are the tools used by specialists in the field of data processing to most effectively communicate the essence of their work to others in the field. Within this document and in general, an algorithm is a self-consistent sequence of operations leading to a desired result. Operations require physical manipulation of physical quantities. Generally, although not necessarily, these quantities take the form of electrical or magnetic signals that can be stored, transmitted, combined, compared, or otherwise manipulated. It turned out that for common use it is convenient to characterise these signals in the form of bits, values, elements, symbols, components, numbers, etc.

However, it should be understood that all of these and similar terms should be associated with the corresponding physical quantities, and that they are just convenient labels applied to these quantities. Unless expressly and unambiguously indicated in the following discussion, it should be assumed that throughout the text, the terms such as "determination", "computation", "calculation", "computation", "obtaining", "establishing", "changing", etc., refer to the actions and processes of a computational device or similar electronic computational device that works with data and converts data presented in the form of physical (for example, electronic) quantities in the registers and memory of the computational device into other data similarly presented in the form of physical quantities in memory or registers of a computational device, or other similar storing, transmitting or displaying devices.

It should be understood that the above description is illustrative and not limiting. Various other embodiments will become apparent to a skilled person upon reading and understanding the above description. Therefore, the scope of the disclosure is to be determined by referencing the claim attached hereto and the full scope of equivalents to which such claims confer a right.

## Claims

1. Automated assessment system of the quality of a dialogue system in real time, comprising:
1) a dialogue topic determination module, capable of receiving a dialogue text in real time and automatically determining the topic of this dialogue text;
2) a dialogue text processing module, capable of isolating phrases from the dialogue text based on topic data that have been determined by the topic determination module;
3) a phrase filtering module capable of replacing personal information with specialised topic words;
4) a state of dialogue classifier module, capable of determining the motivation for continuing the topic of the dialogue in real time based on a sequence of phrases and determining the state of completion of the dialogue on the topic determined by the dialogue topic determination module;
5) a quality of dialogue classifier module, capable of assigning a quality score to the dialogue based on phrases received from the state of dialogue classifier module when receiving information about the state of completion of the dialogue.

2. The system according to Claim 1, **characterised in that** it includes a module for additional training of the dialogue system capable of additional training of the dialogue system based on the score of the dialogue quality.

3. The system according to Claim 1, **characterised in that** an open-source library for topic modelling of large collections of text documents (BigARTM) or k-means is used to classify topics.

4. The system according to Claim 1, **characterised in that** numbers, names, geographical names, company names, individuals are considered personal information.

5. The system according to Claim 1, **characterised in that** the topic word list is pre-formed using Named Entity Recognition (NER) mechanisms.
